# EUROPÄISCHE PATENTSCHRIFT

(11) **EP 1 191 269 B1**
(45) Veröffentlichungstag und Bekanntmachung des Hinweises auf die Patenterteilung: **10.01.2007**
(21) Anmeldenummer: 01122714.7
(22) Anmeldetag: 21.09.2001
(51) Int. Cl.: F16L 27/04

(54) **Toleranzausgleichende lösbare und nicht lösbare Rohrverbindungen**
Tolerance-compensating disconnectable and non-disconnectable pipe connections
Dispositif de raccords de tuyaux démontable et indémontable avec compensation des tolérances

(30) Priorität: 22.09.2000 DE 10047577
(43) Veröffentlichungstag der Anmeldung: 27.03.2002
(73) Patentinhaber: Faurecia Abgastechnik GmbH, 90765 Fürth (DE)
(72) Erfinder: Binöder, Harald, 91459 Markt Erlbach (DE)
(74) Vertreter: Tergau & Pohl Patentanwälte

(56) Entgegenhaltungen:
- DE-U- 29 615 009
- FR-A- 853 931
- FR-A- 2 468 825
- GB-A- 530 965
- US-A- 4 132 437
- US-A- 5 460 416

## Beschreibung

Die vorliegende Erfindung betrifft eine Rohrverbindung mit den Merkmalen des Oberbegriffs des Anspruchs 1. Bei lösbaren Rohrverbindungen, insbesondere auf dem Gebiet der Abgastechnik, wirken sich Lage-, Richtungs- oder Fluchtungsfehler der zu verbindenden Rohrenden nachteilig aus. Insbesondere führen derartige Fehler zu Positionsabweichungen. Diese Positionsabweichungen sind beispielsweise bei Endrohren von Abgasanlagen vor allem dann unerwünscht, wenn das Endrohr der Abgasanlage sichtbar in einem Ausschnitt der hinteren Fahrzeugschürze angeordnet ist. Das Endrohr bzw. die Ausströmöffnung des Endrohrs liegt dann nicht konzentrisch im entsprechenden Ausschnitt der Fahrzeugschürze ein, was das Fahrzeugdesign optisch beeinträchtigt, weil es auf den Betrachter den Eindruck einer fehlerhaft montierten Abgasanlage entfaltet. Darüber hinaus können nicht konzentrisch im Ausschnitt der Fahrzeugschürze einliegende Endrohre durch Schwingungen Anschlaggeräusche oder Ähnliches verursachen.

Aus der DE-U-296 15 009 ist aus dem Bereich der Hausinstallation eine Rohrverbindung bekannt. Bei dieser bekannten Rohrverbindung ist eine rohrförmige Muffe vorgesehen, in welche jeweils endseitig ein Rohrende eingeschoben ist. Die in die Muffe eingeschobenen Rohrenden sind jeweils konvex ausgeformt, um in eine entsprechende konkave Ausformung am jeweiligen Ende der Muffe einzugreifen. Aufgrund dieser sphärischen Ausformung ist es möglich, die Rohrenden gegenüber der Muffe zu verschwenken, wobei die konkaven Ausformungen in der Muffe und die konvexen Ausformungen an den Rohrenden nach Art eines Kugelgelenks zusammenwirken.

Aus der US-A-5 460 416 ist eine weitere Rohrverbindung bekannt, bei welcher eine Muffe zwei Rohrenden aufnimmt und bei welcher die Rohrenden gegenüber der Muffe verschwenkbar sind. Die Rohrenden sind hierbei in der Muffe formschlüssig gelagert. Die Rohrenden weisen einen Bund auf, in welchen jeweils eine Aufnahmenut für einen Sprengring eingeformt ist. Des Weiteren ist in die Muffe eine Fixierungsnut für denselben Sprengring eingeformt, so dass der Sprengring sowohl in der Aufnahmenut am Rohrende als auch in der Fixiernut in der Muffe einliegt und die Rohrenden so an der Muffe formschlüssig sichert. Zur Winkelverstellbarkeit der Rohrenden sind die Nuten so ausgestaltet, dass der Sprengring jeweils mit Spiel in Axialrichtung der Muffe gelagert ist.

Der Erfindung liegt die Aufgabe zugrunde, eine Rohrverbindung so auszugestalten, dass trotz der unvermeidbaren Bauteiltoleranz eine lagerichtige Montage der Einzelrohre möglich ist bei gleichzeitiger Sicherung der jeweiligen Rohrenden in ihrer Montageendstellung. Diese Aufgabe ist durch die Merkmalskombination des Anspruchs 1 in erfinderischer Weise gelöst. Die rückbezogenen Ansprüche betreffen teilweise zweckmäßige und teilweise für sich selbst erfinderische Weiterbildungen der Erfindung.

Nach der Erfindung sind in eine Muffe die beiden miteinander zu verbindenden Rohrenden eingeschoben. Zwischen dem Außenmantel mindestens eines der beiden Rohrenden und der Muffe ist eine sphärische Ausformung vorgesehen. Ein Teilbereich dieser sphärischen Ausformung liegt entweder am Außenmantel des Rohrendes oder am Innenmantel der Muffe an. Wegen der sphärischen, also leicht balligen Ausgestaltung der Ausformung kann das mit der Ausformung versehene Rohrende bzw. das im Bereich der Ausformung in der Muffe gelagerte Rohrende gegenüber der Muffe nach Art eines Kugelgelenks in einem engen Bereich verschwenkt werden, ohne dass das Rohrende verspannt oder verzogen werden muss. Es ist auf diese Weise möglich, einen Richtungsfehler bzw. Winkelfehler zwischen den Rohrenden, bezogen auf die Rohrmuffe, leicht auszugleichen, weil über den gesamten Verschwenkbereich des Rohrendes, der durch die sphärische Ausformung vorgegeben ist, die sphärische Ausformung teilweise am Außenmantel des Rohrendes bzw. am Innenmantel der Muffe anliegt und so ein bündiges Anliegen des Außenmantels des Rohrendes am Innenmantel der Muffe gewährleistet.

Mit Hilfe der im kennzeichnenden Teil des Anspruchs 1 vorgesehenen Rohrschelle werden die Rohrenden gegenüber der Muffe in ihrer Montageendstellung fixiert. Wird die erfindungsmäßige Rohrverbindung in eine Abgasanlage eingesetzt, ist so die Leckrate der Abgasanlage verringert. Systematisch weitergebildet ist die Erfindung durch die deckungsgleiche Anordnung der Rohrschelle mit der jeweiligen sphärischen Ausnehmung im Montageendzustand. Auf diese Weise hebt die Rohrschelle im Bereich der sphärischen Ausformung die Beweglichkeit des Rohrendes gegenüber der Muffe auf, so dass die kugelgelenkartige Verschwenkbarkeit der Rohrenden aufgehoben ist. Der Wirkungsgrad der Rohrschelle ist damit weiter erhöht.

Anspruch 2 betrifft den Fall einer sphärischen Ausformung im Bereich des Au-ßenmantels eines Rohrendes. Diese Ausformung liegt am Innenmantel der Muffe an. Die sphärische Ausformung ist nach Art eines Kugelgelenks wirksam, so dass das Rohrende gegenüber der Muffe in einem engen Bereich verschwenkt werden kann, ohne dass das Rohrende verspannt oder verzogen werden muss. Auf diese Weise ist es möglich, Winkel- und Richtungsfehler zwischen den Rohrenden bezogen auf die Rohrmuffe leicht auszugleichen.

Anspruch 3 beinhaltet gewissermaßen die kinematische Umkehrung des Anspruchs 2. Dort sind nämlich die Rohrenden gegenüber dem Stand der Technik unverändert, während in die Muffe sphärische Einbuchtungen eingeformt sind. Diese sphärischen Einbuchtungen stehen in Richtung auf den Außenmantel der Rohrenden hinaus. Das Rohrende liegt im Montageendzustand auf diese Weise mit seinem Außenmantel an der sphärischen Einbuchtung der Muffe an. Die sphärische Einbuchtung ist wiederum nach Art eines Kugelgelenks wirksam, so dass das Rohrende gegenüber dem Muffeninnenmantel in einem engen Bereich verschwenkt werden kann, ohne dass das Rohrende verspannt oder verzogen werden muss. Auf diese Weise ist es möglich, Winkel- und Richtungsfehler zwischen den Rohrenden bezogen auf die Rohrmuffe leicht auszugleichen.

Nach Anspruch 4 ist die Ausformung als auf das Rohrende aufgeschobener sphärischer Ring ausgestaltet. Mit Hilfe eines derartigen massiven Profilrings kann eine sehr hohe Oberflächenqualität der Ausformung realisiert werden. Insbesondere kann dieser Ring sehr exakt rundgedreht werden und hinsichtlich der Rauhtiefe des Materials optimiert sein. Außerdem kann ein beliebiger Werkstoff für den Ring das üblicherweise verwendete Blechmaterial für die Rohre ergänzen. Werden teure Edelstahlrohre verwendet, kann der Ring aus einem anderen, vielleicht preisgünstigeren Material gefertigt sein. Schließlich ist es auch möglich, den sphärischen Ring nach Anspruch 3 als Federring auszugestalten. Ein Federring hat nicht nur eine hohe Oberflächenqualität eines massiven Profilrings, sondern eignet sich aufgrund seiner federnden Eigenschaften auch besonders gut, die Richtungs- bzw. Winkelfehler zu kompensieren.

Die Ansprüche 5 und 6 betreffen eine weitere Ausführungsform der Erfindung, nämlich eine mit Hilfe eines Umformverfahrens gefertigte sphärische Ausformung. Hierbei wird der Rohrmantel direkt umgeformt, nach der Lehre des Anspruchs 5 kalibriert. Das Kalibrieren hat den Vorteil, dass Rohrenden von Abgasanlagen ohnehin vor der Montage oftmals einen Kalibriervorgang durchlaufen, so dass die sphärische Ausformung hier gleich mitkalibriert werden kann, ohne dass ein weiterer Fertigungsgang erforderlich ist.

Die Montage der Rohrenden ist weiter vereinfacht durch die Anordnung einer sphärischen Ausformung an beiden Rohrenden gemäß Anspruch 7. Hierbei können die Rohrenden gegenüber der Muffe optimal platziert werden. Außerdem ist ein größeres Winkelfehlerintervall auf diese Weise kompensierbar.

Die in Anspruch 8 vorgeschlagene Einformung eines zusätzlichen konkaven Aufnahmebereichs in den Innenmantel der Muffe zur Aufnahme der jeweils zugeordneten sphärischen Ausformung im Rohrende ermöglicht es, Muffe und Rohrende formschlüssig zu verbinden. In diesem Fall ist der an die sphärische Ausnehmung angepasste Aufnahmebereich in der Muffe als Positionierungshilfe in axialer Richtung und Maßnahme zur Verbesserung der Gasdichtigkeit der Verbindung wirksam.

Die Fertigung der Verbindung ist durch die Anbringung der in Anspruch 9 vorgeschlagenen Markierungswarzen oder Markierungskerben vereinfacht. Hierbei dienen die an den Rohrenden angebrachten Markierungswarzen gewissermaßen als Anschlag für den Öffnungsrand der Muffe bzw. die Markierungskerben als optische Montagehilfen. Beim Montagevorgang ist auf diese Weise von außen her sofort sichtbar, wenn das Rohrende vollständig in die Muffe eingeschoben ist, also das Rohrende seine vorgesehene Montageendstellung gegenüber der Muffe erreicht hat.

Anspruch 10 beinhaltet eine Mischform der Erfindung mit einer sphärischen Ausnehmung in der Muffe zur verschwenkbaren Lagerung und Verbindung eines herkömmlichen hohlzylindrischen Rohrendes auf der einen Seite der Rohrverbindung und einem Rohrende mit einer sphärischen Ausnehmung auf der anderen Seite der Rohrverbindung ohne Ausnehmung in der Muffe. Natürlich kann jede Seite dieser Verbindung nach einem der übrigen Ansprüche weitergebildet sein. Es sind also alle denkbaren Mischformen der verschiedenen Ausführungen ohne weiteres möglich.

Anhand der in den Zeichnungen dargestellten Ausführungsbeispiele ist die Erfindung näher erläutert. Es zeigen:
- Fig. 1: eine Seitenansicht der erfindungsmäßigen Rohrverbindung,
- Fig. 2: eine geschnittene Ansicht der in Fig. 1 dargestellten Rohrverbindung,
- Fig. 3: eine Darstellung gemäß Fig. 2 mit Rohrenden mit deutlich erkennbarem Winkelversatz gegeneinander,
- Fig. 4: eine geschnittene Seitenansicht einer alternativen Ausführungsform der Rohrverbindung mit konkaven Aufnahmebereichen im Bereich des Innenmantels der Muffe,
- Fig. 5: eine geschnittene Seitenansicht einer Rohrverbindung eines Hosenrohrs einerseits mit zwei parallelen Rohrenden andererseits,
- Fig. 6: eine geschnittene Ansicht der in Fig. 1 dargestellten Rohrverbindung mit Profilringen als sphärische Ausformung,
- Fig. 7: eine Seitenansicht gemäß Fig. 5 mit Federringen als sphärische Ausformung,
- Fig. 8: eine geschnittene Seitenansicht einer Ausführungsform mit sphärischen Einbuchtungen in der Muffe und
- Fig. 9: eine Seitenansicht gemäß Fig. 8 mit zusätzlichen konkaven sphärischen Ausformungen in den Rohrenden.

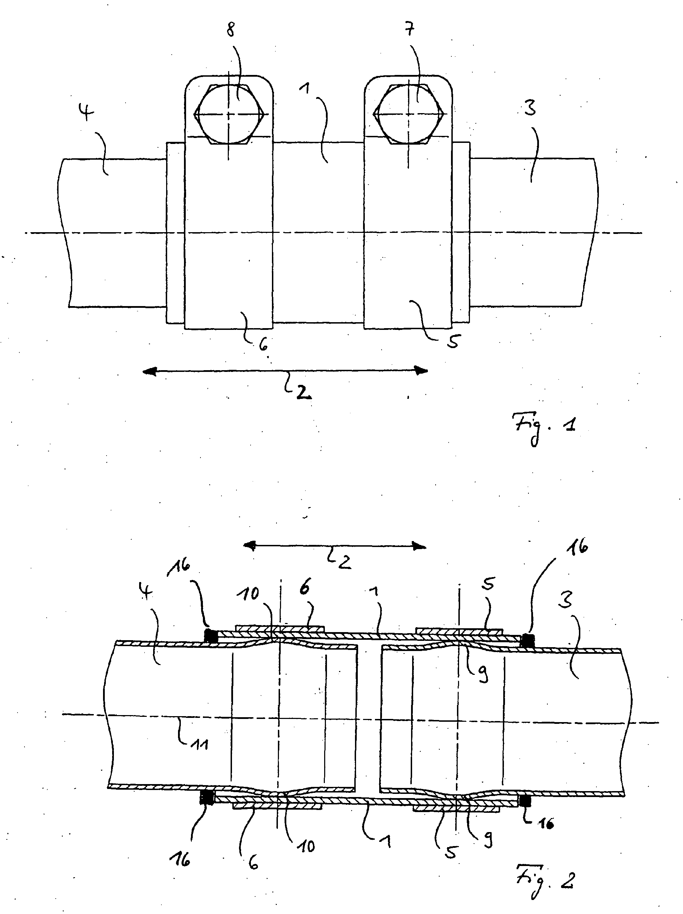

In Fig. 1 erkennbar sind zwei aus einer Muffe 1 in Längsrichtung 2 hinausstehende Rohrenden 3,4. Die Rohrenden 3,4 sind in der Muffe 1 lagegesichert jeweils durch eine Rohrschelle 5,6, welche jeweils mittels einer Spannschraube 7,8 vorgespannt werden kann.

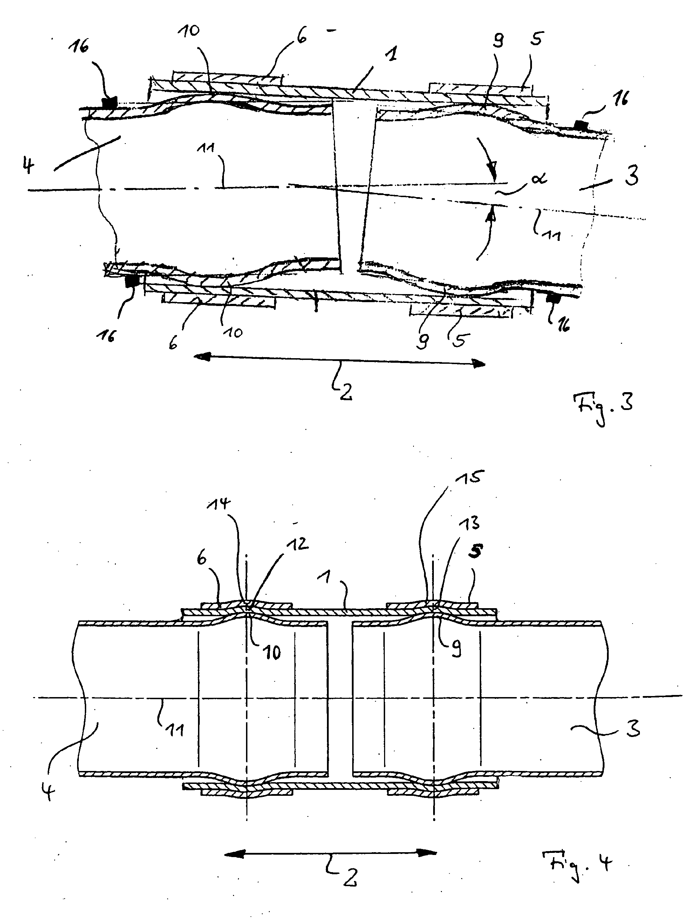

In Fig. 2 erkennbar sind die beim Ausführungsbeispiel in die Rohrenden 3,4 eingeformten sphärischen Ausformungen 9,10, welche beim Ausführungsbeispiel konvex ausgestaltet sind. Die sphärischen Ausformungen 9,10 erstrecken sich um den gesamten Umfang der Rohrenden 3,4 herum. In Fig. 2 erkennbar ist die Tatsache, dass die Rohrenden 3,4 lediglich mit ihren sphärischen Ausformungen am Innenmantel der zylindrischen Muffe 1 anliegen.

Mit der Erfindung ist es deshalb möglich, sowohl die ursprünglich verwendete Muffe 1 als auch die ursprünglich verwendeten Rohrschellen 5,6 beizubehalten. Dies ist insbesondere im Automobilbau vorteilhaft, wo die Rohrschellen 5,6 hinsichtlich ihrer Größe konstruktiv an die Bodengruppe des Fahrzeugs angepasst sind, so dass es ohne weiteres möglich ist, die erfindungsmäßige Rohrverbindung ohne weitere konstruktive Änderungen sofort einzusetzen.

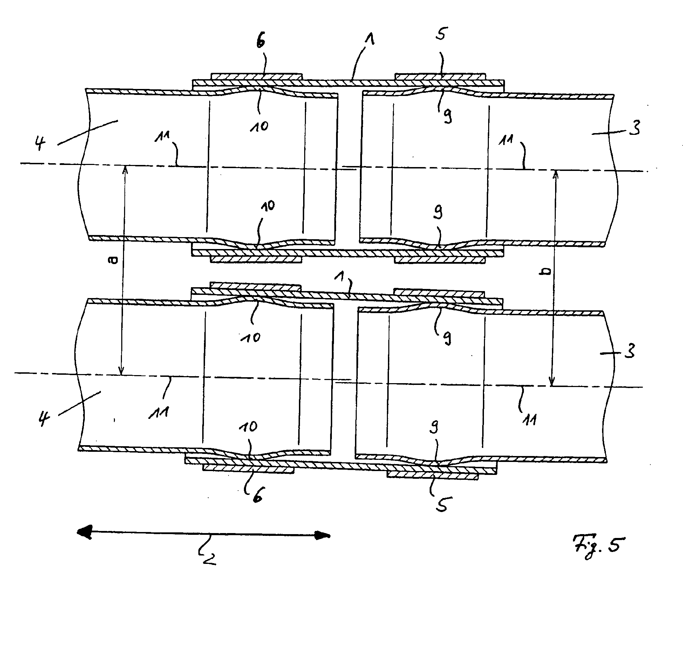

Während die Darstellung in Fig. 2 den idealen Fall zweier hinsichtlich ihrer Rohrmittellängsachse 11 miteinander fluchtender Rohrenden 3,4 zeigt, zeigt Fig. 3 eine baugleiche Anordnung einer Rohrverbindung, jedoch mit Rohrenden 3,4, die jeweils einen Winkelfehler gegeneinander aufweisen. Aus der Fig. 3 erkennbar ist die Tatsache, dass die Rohrmittellängsachse 11 des links in der Zeichnung dargestellten Rohrendes 4 nicht parallel zur Längsrichtung 2 verläuft. Auch die Rohrmittellängsachse 11 des in der Zeichnung rechts dargestellten Rohrendes 3 verläuft nicht parallel zur Längsrichtung 2. Darüber hinaus verlaufen auch die Rohrmittellängsachsen 11 beider Rohrenden 3,4 nicht parallel, sondern weisen einen Winkelfehler gegeneinander auf, welcher dem Winkel α entspricht. Gleichwohl brauchen die Rohrenden 3,4 nicht verformt zu werden, um in der Muffe 1 einzuliegen. Aus der Darstellung der Fig. 3 ist vielmehr erkennbar, dass die Rohrenden 3,4 gegenüber der Längsrichtung 2 verkippt in der Muffe 1 einliegen. Trotz des dem Winkel α entsprechenden Winkelfehlers liegen die Rohrenden 3,4 mit ihren sphärischen Ausformungen 9,10 am Innenmantel der Muffe 1 bündig an und sind darüber hinaus mit Hilfe der Rohrschellen 5,6 an der Muffe fixiert, ohne gegenüber der Muffe 1 verspannt oder verformt zu sein.

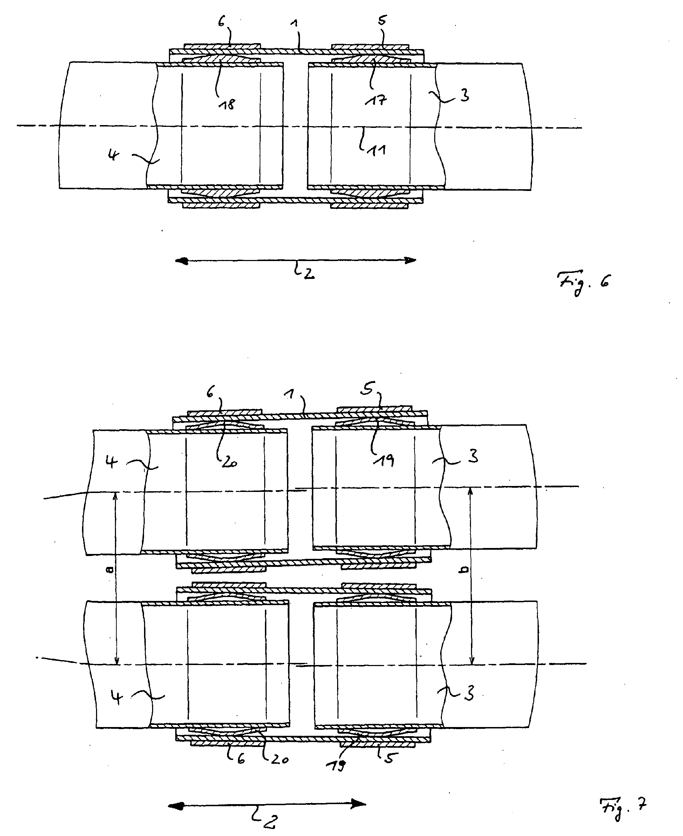

Fig. 4 zeigt eine Ausführungsform der Rohrverbindung mit nochmals verringerter Leckrate der Konstruktion. Bei dieser Ausführungsform weist die Muffe 1 jeweils zwei an die konvexen, sphärischen Ausformungen 9,10 in den Rohrenden 3,4 angepasste konkave Aufnahmebereiche 12,13 auf, so dass im Montageendzustand die sphärische Ausformung 9 im konkaven Aufnahmebereich 13 bzw. die sphärische Ausformung 10 im konkaven Aufnahmebereich 12 einliegt. Schließlich sind auch die Rohrschellen 5,6 mit entsprechenden sphärischen Ausbiegungen 14,15 versehen.

In Fig. 2 und 3 sind darüberhinaus auf den Rohrenden 3,4 Markierungswarzen 16 angebracht. In Fig. 2 sind diese Markierungswarzen 16 als Anschlag gegen die Ränder der Muffe 1 wirksam. In Fig. 3 sind die Markierungswarzen 16 lediglich optische Postionierungshilfen, die optional auch als Markierungskerben oder dergleichen ausgeführt sein können.

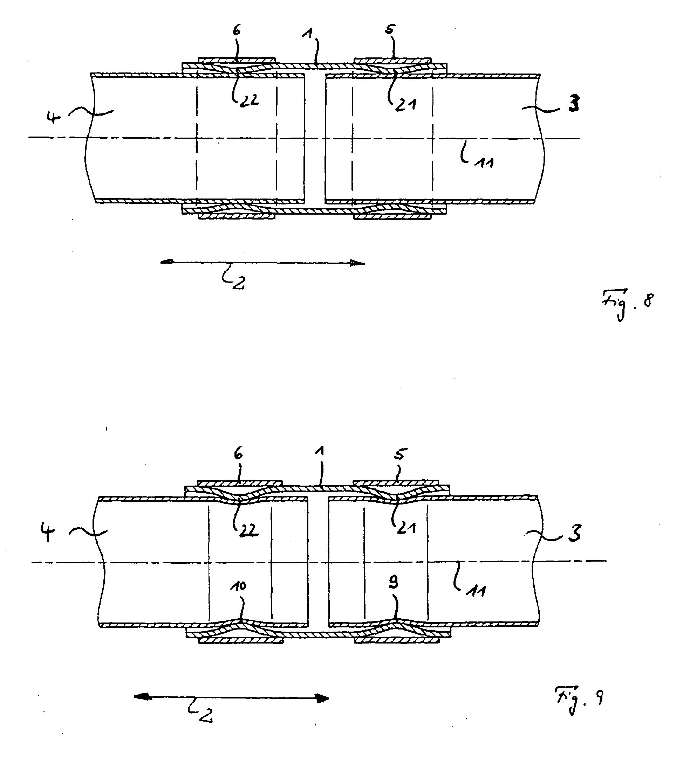

Fig. 5 zeigt eine weitere Ausführung der Rohrverbindung für die Verbindung eines Hosenrohrs mit zwei parallelen Rohrenden. In der linken Hälfte der Fig. 5 dargestellt sind die beiden Rohrenden 4 eines nicht weiter dargestellten Hosenrohrs. Diese Rohrenden haben bezüglich ihrer Rohrmittellängsachsen 11 den Hosenrohrachsabstand a. Die Hosenrohrenden 4 sind jeweils in eine Muffe 1 analog dem Ausführungsbeispiel in Fig. 2 eingeschoben und jeweils durch eine Rohrschelle 6 fixiert. Die rechte Hälfte der Fig. 2 zeigt die Rohrenden 3 der beiden mit den Hosenrohrenden 4 zu verbindenden Rohre. Diese Rohre können ebenfalls eine zweiflutige Rohreinheit sein, können aber auch Einzelrohre sein. Die Rohrenden 3 haben bezüglich ihrer Rohrmittellängsachsen 11 den Achsabstand b. In dem in Fig. 5 dargestellten Ausführungsbeispiel ist der Hosenrohrachsabstand a kleiner als der Achsabstand b, der mit dem Hosenrohr zu verbindenden Rohrenden 3. Die Kompensation der unterschiedlichen Achsabstände a und b erfolgt hierbei wiederum über die sphärischen Ausformungen 9, 10 an den Rohrenden 3, 4. Mit der Erfindung ist es also möglich, sowohl den Winkelversatz von Rohrenden als auch einen Versatz hinsichtlich des Achsabstands von Rohrenden gegenüber Hosenrohren zu kompensieren. Auch können Längentoleranzen in axialer Richtung durch unterschiedliche Montagepositionen ausgeglichen werden.

Fig. 6 zeigt prinzipiell die gleiche Anordnung wie Fig. 2, so dass identische Teile mit identischen Bezugsziffem versehen sind. Im Gegensatz zu dem in Fig. 2 gezeigten Ausführungsbeispiel sind keine sphärischen Ausformungen in die Rohrenden eingeformt. Vielmehr sind die sphärischen Ausformungen von auf die Rohrenden 3, 4 aufgeschobenen sphärischen Profilringen 17, 18 gebildet. Im Ausführungsbeispiel tragen die sphärischen Profilringe 17, 18 nach außen konvex in Richtung auf die Muffe 1 hervorspringende sphärische Ausformungen. Die Funktionsweise ist dieselbe wie diejenige der in die Rohrenden eingeformten sphärischen Ausformungen 9, 10 beim Ausführungsbeispiel gemäß Fig. 2.

Fig. 7 zeigt analog Fig. 5 die Verbindung eines Hosenrohrs mit seinen Hosenrohrenden 4 mit Rohrenden 3, wobei der Hosenrohrachsabstand a wiederum kleiner ist als der Achsabstand b der Rohrenden 3. Hierbei sind auf die Rohrenden 3 wiederum sphärische Ringe aufgeschoben. Im Gegensatz zum Ausführungsbeispiel der Fig. 6 sind dies jedoch keine sphärischen Ringe aus Vollmaterial, also keine Profilringe 17, 18, sondern sphärische Federringe 19, 20, die mit ihrer Federkraft auf den Rohrenden 4 gelagert sind. Diese Federringe 19, 20 haben den Vorteil, dass sie infolge ihrer Federeigenschaft ihrerseits Winkel- und Lagefehler helfen zu kompensieren.

Die Figuren 8 und 9 zeigen eine weitere Ausführungsform der Erfindung, bei welcher die Muffe 1 mit konkaven, sphärischen Einbuchtungen 21, 22 versehen ist. Bei dem in Fig. 8 dargestellten Ausführungsbeispiel sind die Rohrenden 3, 4 zylinderförmig ausgestaltet ebenso wie die Rohrschellen 5, 6. Die sphärischen Ausformungen sind hierbei in die Muffe 1 eingebracht, so dass die Rohrenden 3, 4 bei diesem Ausführungsbeispiel lediglich im Bereich der sphärischen Einbuchtungen 21, 22 an der Muffe 1 bündig anliegen. Auch mit dieser Ausführungsform ist es wiederum möglich, sowohl die Rohrschellen 5, 6 als auch die konventionellen Rohre beizubehalten und mit Hilfe der sphärischen Einbuchtungen 21, 22 Fluchtungs-Winkel- oder Lagefehler zu kompensieren.

Fig. 9 zeigt schließlich eine Weiterentwicklung des Ausführungsbeispiels gemäß Fig. 8. Hierbei weist nicht nur die Muffe 1 sphärische Einbuchtungen 21, 22 auf, sondern in den Innenmantel eines jeden Rohrendes 3, 4 ist eine sphärische Ausformung 9, 10 eingeformt, die beim Ausführungsbeispiel gemäß Fig. 9 konkav analog der konkaven sphärischen Einbuchtung 21, 22 ausgebildet ist.

Der Vollständigkeit halber sei erwähnt, dass auch Mischformen möglich sind, also die in den Fig. 1 bis 9 dargestellten Ausführungsbeispiele auch miteinander beliebig kombiniert werden können. Dies hat den Vorteil, dass - wo es erwünscht ist - die Rohrenden 3, 4 konventioneller Rohre beibehalten werden können, während an anderer Stelle Rohrenden 3, 4 mit konvexen (Fig. 2) oder konkaven (Fig. 9) sphärischen Ausformungen 9, 10 eingesetzt werden können.

## Patentansprüche

1. Rohrverbindung
• mit einer Muffe (1)
• mit zwei in die Muffe (1) eingeschobenen Rohrenden (3,4), und
• mit einer sphärischen Ausformung (9,10,21,22) zwischen dem Innenmantel der Muffe (1) und dem Außenmantel mindestens eines Rohrendes (3,4),
**gekennzeichnet durch**
jeweils eine ein Rohrende (3,4) in der Muffe (1) fixierende, vorspannbare Rohrschelle derart, dass die Rohrschelle (5,6) im Montageendzustand dekkungsgleich mit der sphärischen Ausformung (9,10) angeordnet ist.

2. Rohrverbindung nach Anspruch 1,
**gekennzeichnet durch**
eine sphärische Ausformung (9, 10) am Umfang des Außenmantels mindestens eines Rohrendes (3,4).

3. Rohrverbindung nach Anspruchs 1,
**gekennzeichnet durch**
eine sphärische Einbuchtung (21, 22) im Mantel der Muffe (1).

4. Rohrverbindung nach Anspruch 1,
**gekennzeichnet durch**
einen auf das Rohrende (3, 4) aufgeschobenen sphärischen Ring (17,18,19,20) als Ausformung (9,10).

5. Rohrverbindung nach Anspruch 2,
**dadurch gekennzeichnet,**
**dass** die sphärische Ausformung (9, 10) in den Rohrmantel eingeformt ist.

6. Rohrverbindung nach Anspruch 5,
**gekennzeichnet durch**
eine in den Rohrmantel kalibrierte sphärische Ausformung (9,10).

7. Rohrverbindung nach einem der vorhergehenden Ansprüche,
**gekennzeichnet durch**
eine sphärische Ausformung (9, 10) im Außenmantel beider Rohrenden (3,4).

8. Rohrverbindung nach einem der vorhergehenden Ansprüche,
**gekennzeichnet durch**
einen sphärischen, vorzugsweise konkaven in den Innenmantel der Muffe (1) eingeformten Aufnahmebereich (12,13) zur Aufnahme der sphärischen Ausformung (9,10) des jeweils zugeordneten Rohrendes (3,4).

9. Rohrverbindung nach einem der vorhergehenden Ansprüche,
**gekennzeichnet durch**
eine oder mehrere Markierungswarzen (16) und/oder Markierungskerben am Außenmantel der Rohrenden (3,4).

10. Rohrverbindung nach einem der vorhergehenden Ansprüche,
**gekennzeichnet durch**
eine sphärische Ausformung (9,10) im Außenmantel des einen Rohrendes (3) und eine sphärische Einbuchtung (21,22) im Mantel der Muffe (1) im Bereich des anderen Rohrendes (4).

## Claims

1. Pipe connection
• having a socket (1)
• having two pipe ends (3, 4) pushed into the socket (1), and
• having a spherical shaped portion (9, 10, 21, 22) between the inner lateral surface of the socket (1) and the outer lateral surface of at least one pipe end (3, 4),
**characterized by** a respective pipe clip which fixes a pipe end (3, 4) in the socket (1) and can be prestressed in such a way that the pipe clip (5, 6) is arranged congruently with the spherical shaped portion (9, 10) in the final fitted state.

2. Pipe connection according to Claim 1, **characterized by** a spherical shaped portion (9, 10) on the circumference of the outer lateral surface of at least one pipe end (3, 4).

3. Pipe connection according to Claim 1, **characterized by** a spherical niche (21, 22) in the lateral surface of the socket (1).

4. Pipe connection according to Claim 1, **characterized by** a spherical ring (17, 18, 19, 20), pushed onto the pipe end (3, 4), as shaped portion (9, 10).

5. Pipe connection according to Claim 2, **characterized in that** the spherical shaped portion (9, 10) is formed in the pipe lateral surface.

6. Pipe connection according to Claim 5, **characterized by** a spherical shaped portion (9, 10) calibrated in the pipe lateral surface.

7. Pipe connection according to one of the preceding claims, **characterized by** a spherical shaped portion (9, 10) in the outer lateral surface of both pipe ends (3, 4).

8. Pipe connection according to one of the preceding claims, **characterized by** a spherical, preferably concave, locating region (12, 13) which is formed in the inner lateral surface of the socket (1) and is intended for locating the spherical shaped portion (9, 10) of the respectively associated pipe end (3, 4).

9. Pipe connection according to one of the preceding claims, **characterized by** one or more marking lugs (16) and/or marking notches on the outer lateral surface of the pipe ends (3, 4).

10. Pipe connection according to one of the preceding claims, **characterized by** a spherical shaped portion (9, 10) in the outer lateral surface of the one pipe end (3) and by a spherical niche (21, 22) in the lateral surface of the socket (1) in the region of the other pipe end (4).

## Revendications

1. Raccord de tubes, comprenant :
-- un manchon (1),
-- deux extrémités de tubes (3, 4) enfilées dans le manchon (1), et
-- un bombement sphérique (9, 10, 21, 22) entre l'enveloppe intérieure du manchon (1) et l'enveloppe extérieure de l'une au moins des extrémités de tube (3, 4),
**caractérisé par**
un collier de tube respectif susceptible d'être précontraint, qui fixe une extrémité de tube (3, 4) dans le manchon (1) de telle façon que le collier de tube (5, 6) dans la situation finale de montage est agencé de manière à venir coïncider avec le bombement sphérique (9, 10).

2. Raccord de tubes selon la revendication 1,
**caractérisé par** un bombement sphérique (9, 10) à la périphérie de l'enveloppe extérieure de l'une au moins des extrémités de tube (3, 4).

3. Raccord de tubes selon la revendication 1,
**caractérisé par** un creux sphérique (21, 22) dans l'enveloppe du manchon (1).

4. Raccord de tubes selon la revendication 1,
**caractérisé par** une bague sphérique (17, 18, 19, 20) enfilée sur l'extrémité de tube (3, 4) à titre de bombement (9, 10).

5. Raccord de tubes selon la revendication 2,
**caractérisé en ce que** le bombement sphérique (9, 10) est conformé dans l'enveloppe de tube.

6. Raccord de tubes selon la revendication 5,
**caractérisé par** un bombement sphérique (9, 10) calibré dans l'enveloppe de tube.

7. Raccord de tubes selon l'une des revendications précédentes,
**caractérisé par** un bombement sphérique (9, 10) dans l'enveloppe extérieure des deux extrémités de tube (3, 4).

8. Raccord de tubes selon l'une des revendications précédentes,
**caractérisé par** une zone de réception (12, 13) sphérique, de préférence concave, conformée dans l'enveloppe intérieure du manchon (1) pour recevoir le bombement sphérique (9, 10) de l'extrémité de tube respective associée (3, 4).

9. Raccord de tubes selon l'une des revendications précédentes,
**caractérisé par** un ou plusieurs tétons de marquage (16) et/ou une ou plusieurs encoches de marquage sur l'enveloppe extérieure des extrémités de tube (3, 4).

10. Raccord de tubes selon l'une des revendications précédentes,
**caractérisé par** un bombement sphérique (9, 10) dans l'enveloppe extérieure de l'une des extrémités de tubes (3), et un creux sphérique (21, 22) dans l'enveloppe du manchon (1) dans la zone de l'autre extrémité de tube (4).
